# EUROPEAN PATENT APPLICATION

(11) **EP 2 112 611 A1**
(43) Date of publication of application: **28.10.2009**
(21) Application number: 08103627.9
(22) Date of filing: 21.04.2008
(51) Int. Cl.: G06F 21/00

(54) **License management for groups of network elements**

(71) Applicant: Nokia Siemens Networks Oy, 02610 Espoo (FI)
(72) Inventor: Hoffmann, Thomas, Berlin 12555 (DE); Hofmann, Jens, Schildow 16552 (DE)
(74) Representative: Bruglachner, Thomas E.

(57) **Abstract**

The invention describes a license management system for elements of an IT-network, wherein the licensing of special functions which a network element shall execute consists of two steps. In the first step, all members of a previously defined group of network elements are assigned to this group by a group license key which contains an information element characterizing this group. In a second step, the network element checks all subsequently received license keys, if these also contain an information element which characterizes the same group. If the check is successful, the licensed special functions will be executed, if not, the license key is regarded as not valid for this network element and the special functions will not be executed.

## Description

This invention relates to a system and a method for managing the licensing of software functions executed on IT-network elements like computer system components or telephony system components.

In large IT-networks normally large numbers of network elements are working together, most of them executing software or firmware which often is delivered by several manufacturers to the network providers. These manufacturers normally generate SW licenses for their delivered SW to prevent the use of the delivered SW by not authorized people.

There are several systems and methods known to manage such licenses.

In the European patent EP 0 538 464 B1 a licensing system is described where, when a user wishes to use a licensed product, a message is sent to a central license management facility requesting a license grant. In response to this message, the facility accesses a database to see if a license exists for this product, and, if so, which license units may be allocated to the user. This depends upon the users characteristics, such as the configuration of the platform which will execute the software product or the belonging to a certain group of customers. If the license management facility determines that a license can be granted, it sends a message to the user giving permission to proceed with activation of the product. If not, the message denies permission.

Manufacturers often wish to sell specific functions of their software depending on the type of network provider, the operating system of the network elements for which the software is developed or the contract type with their customers. On the other hand, the manufacturers do not wish to deliver different software releases with different combinations of specific functions for this purpose. In such cases, the manufacturer normally delivers a common software to his customers which includes all specific functions for all types of providers, operating systems or contract types. Then, to enable the specific functions of the network elements, the manufacturer generates separate licenses for each network element, while the knowledge of the allowed specific functions is stored in central or distributed databases.

A high effort is needed for the handling of all these licenses if the number of network elements is high.

The objective of this invention is to reduce the handling effort by enabling all devices of a group, for example for one network provider, with one license key, whereby license keys for this group are not usable for other groups.

This problem is solved by a license mananging system with the features of claim 1 and a method to license network elements with the features of claim 6.

The licensing of the network elements comprises two steps. In the first step, all network elements which shall belong to a defined group (e.g. a certain network provider or a certain type of licensing contract or a certain operating system) are assigned to that group. This is done by a group license key. This group license key includes an information element which characterizes the group, e.g. the network provider. Then this group license key is loaded and stored into all of the network elements which belong to the same group. From this moment on, the network elements know their membership to this specific group.

The loading of a group license key into the network elements may be done by the manufacturer of the network element in his plant. The manufacturer has total control which elements are assigned to the defined groups.

A distribution of the group license keys is also possible by the manufacturer or by the customer who intends to use the licensed special functions by means of servers and clients of the IT-network in which the network element is working. In all mentioned cases, the advantage is that the same procedures and tools of a license management for the group license keys may be used which are also used for the generation and distribution of normal license keys.

In the second step, e.g. when the network elements are already working in their IT-network, new general license keys are loaded into the network elements which have the task to enable special functions of the network elements, but only, if the network element belongs to the certain group for which these special functions are allowed to execute. Now the logic, software or firmware of the network element checks the new general license key if it contains an information element which characterizes the same group to which the network element is assigned to belong. If the check is successful, the network element regards the new general license key as valid for it and will execute the now allowed special functions if necessary.

By this method of a two step validation of license keys, it is no longer necessary to generate and manage different license keys for each network element. The general license keys may be the same for all the world wide purchased software elements of the manufacturer since the decision if a network element may use the licensed function is made by the network element itself.

In a further embodiment of the invention the group license key contains group characterizing information elements not only for one, but for two or more different groups. These groups may also belong to different types of groups, e.g. one group is a network provider and another group is a contract type. By this, different groups of network elements are simultaneously being enabled to execute group specific functions by subsequently received general license keys.

In a further embodiment of the invention, two or more of group license keys are used to enable a network element. One group license key may be loaded e.g. by the manufacturer into the network element to characterize a certain provider, while another group license key may be loaded into the network element by the network provider himself to characterize a certain underlying operating system. While checking subsequently following general license keys against both groups, the network element is enable to execute special functions which are assigned to different groups.

## Claims

1. License management system for IT-network elements, which incorporate a common software or parts of a common software, **characterized in that** the network elements are designed to fulfil specific functions only when belonging to a defined group of network elements and where the membership of a network element to the defined group is assigned by a group license key, which includes a group characterizing information element, and where the group specific functions are enabled by general license keys.

2. License management system according to claim 1, wherein the general license keys include at least two information elements:
one information element indicating the special function or the set of special functions which the network elements of a group shall be enabled for;
another information element indicating the group of network elements.

3. License management system according to any of the above claims, **characterized in that** the defined groups characterize network providers, operators, network domains, countries, customer families, operating systems, applications, license grant dates, manufacturers or the like, which are foreseen to enable different special functions in their respective network elements.

4. License management system according to any of the above claims, **characterized in that** two or more of the group license keys are used to enable a network element to execute special functions which are assigned to different groups.

5. License management system according to any of the above claims, **characterized in that** the general license keys contain group characterizing information elements for two or more different groups.

6. A method to license network elements, which incorporate a common software or parts of a common software, in an IT-network, **characterized in that** the enabling of special functions for a group of network elements comprises the following steps:
- all network elements of a defined group are loaded with a group license key which includes group characterizing information elements;
- each network elements extracts out of the group characterizing information elements the information to which group or groups it belongs and stores this information internally;
- general license keys are loaded into all network elements of the IT-network;
- each network element checks the group characterizing information element of the general license keys if it characterizes the same group or groups to which the network element belongs;
- if the check has been successful each network element enables the execution of the special functions which are indicated by the appropriate information elements of the general license keys.

7. A method according to claim 6, **characterized in that** the group license key is loaded into the network elements belonging to a group by the manufacturer before delivering the network elements to customers.

8. A method according to claim 6, **characterized in that** the group license key is loaded into the network elements by the manufacturer or the customer via the IT-network in which the network elements are working.
